Europäisches Patentamt

European Patent Office

Office européen des brevets

(11) Publication number: 0 363 553 A1

# (12) EUROPEAN PATENT APPLICATION

(21) Application number: 89101304.7

(22) Date of filing: 26.01.89

(51) Int. Cl.⁵: B65D 88/74 , A23B 7/148 , A23L 3/34

(30) Priority: 30.09.88 IT 2212988

(43) Date of publication of application:
18.04.90 Bulletin 90/16

(84) Designated Contracting States:
AT BE CH DE ES FR GB GR LI LU NL SE

(71) Applicant: ISOLCELL ITALIA S.P.A.
Via Antonio Meucci 7
I-39055 Laives (BZ)(IT)

(72) Inventor: Nardin, Karl
Via Monticolo, 10
Appiano (Bz)(IT)
Inventor: Pruneri, Dario
Via Cologna, 1
Bolzano(IT)
Inventor: Villa, Ivano
Via Mendola, 11
Bolzano(IT)

(74) Representative: Forattini, Amelia et al
c/o Internazionale Brevetti Ingg. ZINI,
MARANESI & C. S.r.l. Piazza Castello 1
I-20121 Milano(IT)

(54) Method and apparatus for generating a controlled atmosphere, particularly in containers and ships' holds for storing flowers, fruits and vegetables.

(57) A container is constantly kept at an overpressure by supplying a nitrogen-oxygen mixture generated in selected quantities, according to the stored product, by means of an apparatus that includes an air compressor (1); air filters (2); a molecular separator (3); a $N_2$ -$O_2$ mixture regulator (4); a receiver (5) having a manostat (6); a maximum power regulator (7), for setting the container into working conditions; a flux regulator (8) connected to said maximum power regulator (7) in parallel, for maintaining the working overpressure and for regulating the $CO_2$ generated by the product; an exhaust (10) of the overpressures.

# METHOD AND APPARATUS FOR GENERATING A CONTROLLED ATMOSPHERE, PARTICULARLY IN CONTAINERS AND SHIPS' HOLDS FOR STORING FLOWERS, FRUITS AND VEGETABLES

The present invention relates to a method and apparatus for generating a controlled atmosphere in ships' containers and holds, particularly for storing flowers, fruits and vegetables.

It is known to use a controlled atmosphere for storing fruits, vegetables and flowers in the best conditions for a long time in cold stores. A controlled atmosphere is generated having between 1 and 5 % of $O_2$ and between 0.5 and 10 % of $CO_2$, according to the species and variety, and temperature and relative humidity of the cells are controlled.

The oxygen rate is lowered by using nitrogen catalitic combustion or flame generators or molecular separators.

The cell must be sealed and it has to comply with very stringent pressure tests. Only leaks lower than a set value of mc/h/mq are acceptable to keep the $O_2$, $CO_2$, and $N_2$ percentages to the selected values for each item.

Closed cycle $CO_2$ absorbers are employed to control the $CO_2$ content, by absorbing the exeeding $CO_2$ generated by the metabolism of the items.

The absorbers suck air from the cell, absorb part of the $CO_2$ and deliver back air having a reduced amount of $CO_2$.

The fruit consumes $O_2$ and generates $CO_2$ lowering the amount of $O_2$ to almost zero thus starting fermentative processes which make the items useless.

To obviate this inconvenience, air is delivered to restore the optimum amount of $O_2$ needed. An adapted refrigerating assembly maintains temperature and relative humidity at the selected values.

This known refrigeration process works at normal atmospheric pressure and is monitored by qualified personell.

This type of system cannot be used in containers and ships for the following reasons:

1) It is difficult to seal containers and ships' holds; maintenance, sealing by non-qualified personell, vibrations during shipping, the changing of external ambient conditions ( from -10° to +50° ), spoil the original seal and in time leaks are such as to make it impossible to maintain a controlled atmosphere.

2) The container is moved on trucks, ships, trains or other vectors, by personell not qualified in controlling the atmosphere of the containers.

The aim of the present invention is to obviate to the above problems, that prevent the known technology from being used in containers and ships, by creating a new method and apparatus that allow to maintain the selected controlled atmosphere in containers and ships for storing and shipping fruits and vegetables even in case of conspicuous leaks.

A further aim of the invention is that of eliminating the $CO_2$ produced by the goods and at the same time maintaining the selected values of $O_2$ and $CO_2$.

The above aims are achieved by a method and an apparatus as described respectively in claims 1 to 6 and 7 to 8.

The containers or holds are kept in constant overpressure by supplying a nitrogen and oxygen mixture with selected percentages, and it is thus possible to set the rate of $O_2$ and $CO_2$ at optimum values, by simply variating the flux of the nitrogen-oxygen mixture, without supplying $CO_2$ and using that mixture as washing fluid of the exceeding $CO_2$ produced by the goods.

Such washing action is allowed by the inevitable air leaks of containers and holds; those leaks are turned from an undesired circumstance into a useful factor by the method according to the invention.

Advantageously, to generate the nitrogen-oxygen mixture, a molecular separator is employed, e.g. of the hollow fiber type.

That allows to obtain the nitrogen, required by the method according to the invention, in a limited space and using as power supply just the electric energy needed for compressing air, without any combustion process.

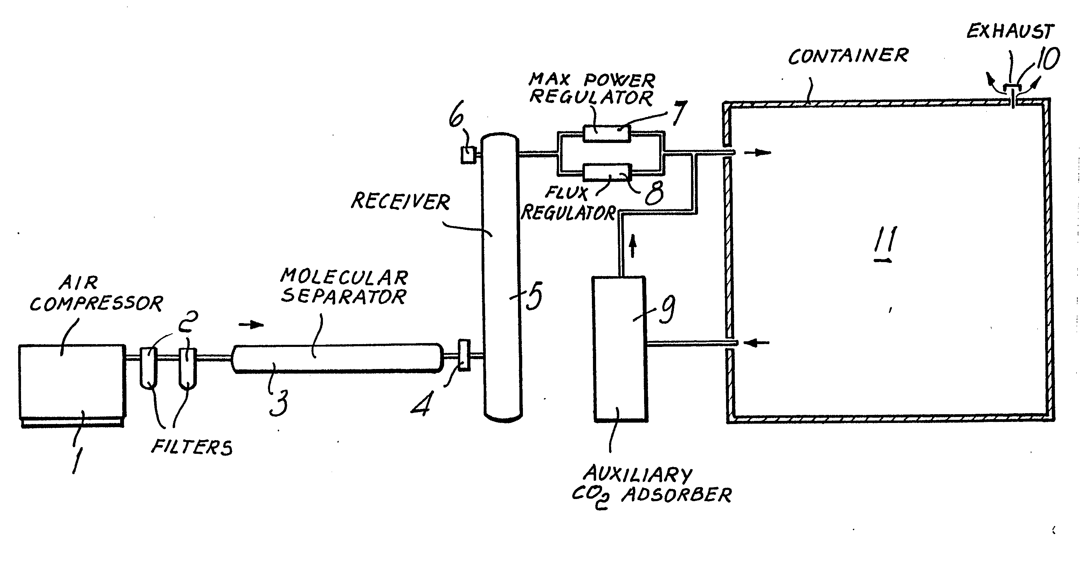

Further characteristics and advantages of the invention will be apparent by the following description of an example of embodiment of the invention, illustrated in the enclosed drawing showing the operation diagram of an apparatus for working the process.

A molecular separator generates a nitrogen-oxygen mixture at selected percentages according to the shipped product.

The mixture is supplied to the container or hold in variable quantities. The maximum quantity is supplied at the beginning while setting the apparatus at working conditions, the oxygen is reduced from 21% to 3-5% in few hours.

Subsequently, the mixture supply is reduced according to the actual leak rate of the container, or hold, and to the $CO_2$ generated by the product ( which depends on the specific "breathing" intensity of the product ).

In this manner the container is constantly kept at a slight overpressure ( ca. 2-3 mm water column ), preventing $O_2$ from entering from outside. Moreover, it is possible to keep the selected values of O₂ and CO₂, by simply variating the mixture flux supplied to the container, or hold, and by keeping it at a slight overpressure.

It is to be noted that, as already mentioned, according to the present method there is no supply of $CO_2$, the amount of $CO_2$ produced by the stored product being regulated by washing with the mixture generated by the system.

In case there is so much $CO_2$ produced that the maximum supply of the separator is not sufficient to maintain the optimum percentage of it, the exceeding amount of $CO_2$, which cannot be eliminated by the flux generated by the separator, is purified by means of a $CO_2$ absorber of adequate capacity.

The one figure included illustrates an apparatus for carrying out the method according to the present invention. The apparatus comprises the following devices, connected in series: an air compressor 1; air filters 2; a molecular separator 3; an $N_2 + O_2$ mixture regulator 4; a receiver 5; a manostat 6; a maximum power regulator 7, for setting the apparatus at working conditions; a flux regulator 8, connected in parallel to the maximum power regulator 7, for maintaining the working overpressure and for regulating the $CO_2$ generated by the product; and an exhaust 10 of the overpressures.

It is also provided an auxiliary $CO_2$ absorber 9 connected between the container, or hold, 11 and the outlet of regulators 7,8, for absorbing the exceeding amount of $CO_2$, in case the stored product has a high metabolism.

The method and the apparatus according to the present invention may have numerous modifications and variations, all within the inventive concept; furthermore, all the details may be substituted with technically equivalent elements.

The materials employed, as well as the dimentions, may be any according to the specific needs and the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs

## Claims

1. Method for generating and mantaining a controlled atmosphere, particularly in containers and ships' holds, for transporting and storing flowers, fruits and vegetables, characterized in that a container is constantly kept at an overpressure by supplying a nitrogen-oxygen mixture generated in selected quantities according to the product contained in said container.

2. Method, according to claim 1, characterized in that the nitrogen-oxygen mixture of selected quantities is generated by a molecular separator.

3. Method, according to claim 1 or 2 characterized in that the nitrogen-oxygen mixture is supplied to the container in variable quantities, a maximum quantity being supplied at the beginning while setting the working conditions, for reducing the oxygen rate from 21% to 3-5%, subsequently said mixture supplied quantity being reduced according to the actual leak rate of said container and to the $CO_2$ generated by the product depending from its specific breathing intensity.

4. Method, according to one or more of the preceeding claims, characterized in that said constantly maintained working overpressure is of about 2 - 3 mm of water column.

5. Method, according to one or more of the preceeding claims, characterized in that the optimum selected amounts of $O_2$ and $CO_2$ are maintained by simply variating the flux of said nitrogen-oxygen mixture supplied to said container and kept at a slight overpressure.

6. Method, according to one or more of the preceeding claims, characterized in that in case said stored product generates an amount of $CO_2$ greater than a selected value depending on said product and such that said supplied mixture is not sufficient to reduce and maintain said selected value, the exceeding amount of $CO_2$ is absorbed by a $CO_2$ absorber.

7. Apparatus, for carrying out the method of claim 1 characterized in that it comprises connected in series: an air compressor (1); air filters (2); a molecular separator (3); a $N_2$-$O_2$ mixture regulator (4); a receiver (5) having a manostat (6); a maximum power regulator (7), for setting said container into working conditions; a flux regulator (8) connected to said maximum power regulator (7) in parallel, for maintaining the working overpressure and for regulating the $CO_2$ generated by the product; an exhaust (10) of the overpressures.

8. Apparatus, according to claim 7, characterized in that it comprises an auxiliary $CO_2$ absorber (9) connected between said container (11) and said regulators (7,8) outlet.

EXHAUST

CONTAINER

MAX POWER
REGULATOR

6

7

FLUX
REGULATOR

8

RECEIVER

5

10

11

AIR
COMPRESSOR

MOLECULAR
SEPARATOR

2

3

4

9

1

FILTERS

AUXILIARY
CO₂ ADSORBER

EP 0 363 553 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | SOMMAIRE, vol. 19, no. 239, February 1966, pages 47-52; no. 240, March 1966, pages 29-35; CH. FONTANEL: "Stockage de fruits en atmosphère contrôlée"<br>* No. 239, page 52, left-hand column, line 29 - right-hand column, line 11; figure 5 * | 1 | B 65 D   88/74<br>A 23 B    7/148<br>A 23 L    3/34 |
| A | IDEM<br>* No. 240, page 31, right-hand column, line 36 - page 32, left-hand column - end *<br>--- | 2,4-8 | |
| X | EP-A-0 136 042  (THE SHIPPING CORP. OF NEW ZEALAND LTD)<br>* Page 2, line 17 - page 3, line 9 *<br>--- | 1 | |
| A | US-A-4 606 195  (WINKLER)<br>* Column 3, lines 41-51 *<br>--- | 1,4,5 | |
| X | US-A-3 239 360  (DIXON)<br>* Claim 1 *<br>----- | 1,3 | TECHNICAL FIELDS SEARCHED (Int. Cl.5)<br><br>B 65 D<br>A 23 B<br>A 23 L |

The present search report has been drawn up for all claims

| Place of search | Date of completion of the search | Examiner |
|---|---|---|
| THE HAGUE | 05-01-1990 | BEERNAERT J.E. |